# EUROPEAN PATENT SPECIFICATION

(11) **EP 4 090 856 B1**
(45) Date of publication and mention of the grant of the patent: **24.12.2025**
(21) Application number: 21700345.8
(22) Date of filing: 11.01.2021
(51) Int. Cl.: F16B 37/14, E04B 1/24, E04B 1/58, F16B 33/00, F16B 5/02, F16B 7/18, F16B 25/00

(54) **METHOD OF PROTECTING A FIXING**
VERFAHREN ZUM SCHUTZ EINER BEFESTIGUNG
PROCÉDÉ DE PROTECTION D'UNE FIXATION

(30) Priority: 16.01.2020 GB 202000651
(43) Date of publication of application: 23.11.2022
(73) Proprietor: Woolstencroft, David, Lancashire FY6 8EW (GB)
(72) Inventor: Woolstencroft, David, Lancashire FY6 8EW (GB)
(74) Representative: Appleyard Lees IP LLP
(86) International application number: PCT/GB2021/050056
(87) International publication number: WO 2021/144556

(56) References cited:
- WO-A1-03/048592
- FR-A3- 2 712 618
- JP-A- 2014 206 212
- US-A- 4 755 308
- US-A- 5 941 662
- US-A1- 2015 367 954

## Description

The present invention is related to a method of protecting a fixing, in particular the head of a bolt or nut that is fixed into a steel structure or assembly.

In construction of buildings and other steel structures and assemblies, for example oil and gas installations or pipelines, elements are typically secured together with fixings such as bolts and nuts. It is important to provide some protection to the fixings from heat damage, in the event of a fire. One conventional method of protecting the fixings from excessive heat is to place a fire resistant cover over the fixing. The fire resistant cover is typically a cap that is placed over the head of the bolt or the nut. WO 03/048592 A1 describes a bolt head cover.

Disadvantages arise in conventional fixing covers in that air or moisture can ingress between the inner surface of the cover and the fixing, which can lead to corrosion of the fixing.

According to the present invention there is provided a method as set forth in the appended claims. Other features of the invention will be apparent from the dependent claims, and the description which follows.

According to a first aspect of the invention, according to claim 3, there is provided a fixing cover configured to cover an exposed portion of a fixing, the fixing cover comprising a filler and a gripping means for attaching the fixing cover to the fixing.

The filler may be adapted to fill a space between the fixing cover and the fixing.

The feature of the filler filling the space between the inner surface of the fixing cover and the fixing provides the advantage that there is no air space or vacuum between the fixing cover and the fixing, into which air or moisture could ingress. The filler thereby inhibits corrosion of the fixing. The feature of the fixing cover also including gripping means gives additional benefits because a filler that does not set or fully set, or is non-curing, can also be used. In this way, the combination of filler and gripping means is particularly advantageous.

The fixing cover may be a hollow cap. The inner surface of the fixing cover may be concave. The fixing cover may comprise a domed outer surface. The fixing cover may comprise an opening, preferably a circular opening, in which to receive the fixing. The fixing cover may comprise an end surface, surrounding the opening, which may contact a surface of the structure in which the fixing is inserted. The fixing cover may be a ceramic fixing cover or a metal fixing cover. The fixing cover may be a polymeric fixing cover, ceramic fixing cover or a metal fixing cover.

The gripping means may comprise one or more resilient arms. The resilient arms may extend from a central point of the fixing cover.

The gripping means may comprise three or more resilient arms, having equal angles therebetween. The resilient arms may have one or more shoulder sections.

Each of the resilient arms may comprise a flange.

The gripping means may be made of a material which can flex and has some spring characteristics to allow for plastic deformation.

According to a not claimed embodiment, the filler may be a gel, for example silicone gel or grease, which may be Molykote (RTM) 1000 Paste or may be Molykote (RTM) Cu-7439 Plus Paste, the latter may be beneficial for use in for highly corrosive environments.

According to another not claimed embodiment, the filler may be an adhesive material or a sealant, for example an acrylic sealant.

According to a further not claimed embodiment, the filler may be adapted to expand to fill the space between the inner surface of the fixing cover and the fixing.

According to the invention, the filler comprises a corrosion inhibitor. This may provide the advantage that the fixing is further protected from corrosion.

The filler is a small insert of a solid medium, according to the invention a solid tablet, such as a compressed powder tablet. The solid tablet comprises a corrosion inhibiting material. The solid tablet releases a vapour that inhibits corrosion. The solid tablet may be placed in the cap. Advantageously, the solid tablet leaves the bolt/nut surface clean of residue, therefore allowing for easier periodic inspection of the bolt/nut.

The filler may comprise an insulating, preferably thermally insulating, material. This may provide the advantage of improving the protection of the fixing from heat, in the event of a fire.

The fixing may be a bolt or a nut. The fixing cover may cover the head of the bolt or may cover the nut.

A sealant may be provided on the end surface of the fixing cover. The sealant may be adapted to form a seal between the end surface of the fixing cover and the surface of a structure into which the fixing is inserted. The sealant may be the same material as the filler. The sealant may be unitary with the filler.

The seal may provide the advantage of inhibiting ingress of air between the end surface of the fixing cover and the surface of the material surrounding the fixing. The seal may thereby protect the fixing from corrosion. The seal may be particularly advantageous when the fixing is inserted into a structure or assembly with a non-planar or uneven surface, where one or more spaces is provided between the end surface of the fixing cover and the surface of the framework into which the fixing is inserted.

According to another aspect of the invention, according to claim 1, there is provided a method of protecting a fixing, comprising inserting a filler material into a fixing cover to cover an inner surface of a fixing cover, and attaching the cover to an exposed portion of the fixing, wherein when the filler is inserted into the fixing cover and the fixing cover is attached to the fixing, the filler is retained inside the fixing cover, and the gripping means secures the fixing cover to the fixing.

The filler material may fill a space between the inner surface of the fixing cover and the fixing

The filler is a small insert of a solid medium, according to the invention a solid tablet, such as a compressed powder tablet, that provides corrosion inhibition by means of a vapour filling the space between the inner surface of the fixing cover and the fixing.

According to a not claimed embodiment, when the filler is inserted into the fixing cover and the fixing cover is attached to the fixing, the filler may be in a fluid state and the filler may harden after the cover is attached to the fixing. According to another not claimed embodiment, the method may comprise hardening the filler after the cover is attached to the fixing, for example by curing the filler.

The feature of the filler being a fluid when it is inserted into the fixing cover provides the advantage that the process of inserting the filler into the inner surface of the fixing cover is simplified, and the filler can fill up the space between the inner surface of the fixing cover and the fixing.

According to a further not claimed embodiment, the filler may be an expandable material. The filler may expand as it hardens.

The method may comprise forming a seal between the end surface of the cover and the surface of a structure or assembly into which the fixing is inserted.

According to another aspect of the invention, according to claim 11, there is provided a framework for a building comprising a beam, a fixing inserted into the beam and a fixing cover for the fixing, the fixing cover being arranged to cover an exposed portion of the fixing, wherein a filler is provided between the fixing cover and the fixing, and wherein the fixing cover further comprises gripping means.

The fixing cover may include any of the features described above in relation to the first aspect of the invention, as long as it falls within the wording of claim 3.

According to another aspect of the invention, according to claim 12, there is provided a pipeline comprising at least two pipes, each of the pipes having a flange for connection to an adjacent pipe, at least one fixing inserted through adjacent flanges and a fixing cover for the fixing, the fixing cover being arranged to cover an exposed portion of the fixing, wherein a filler is provided between the fixing cover and the fixing, and the fixing cover further comprises gripping means.

The pipeline may be an oil or gas pipeline. The fixing cover may include any of the features described above in relation to the first aspect of the invention, as long as it falls within the wording of claim 3. One fixing cover may be provided for each of two ends of the fixing.

The at least one fixing may extend through the flanges such that a first end and a second end of the fixing is an exposed portion of the fixing. A fixing cover may be arranged to cover each of the first end and the second end of the fixing. The connection may comprise a plurality of fixings inserted through the flanges, preferably eight fixings. Fixing covers may be arranged to cover each of the first and second ends of each of the plurality of fixings. The fixing covers may further, or alternatively be cover moulded to cover any exposed fixing shank between the two faces of the flanges.

An advantage of arranging the fixing cover with the filler on the fixing of the pipeline connection is that the fixing cover can inhibit the bolt from expanding in the event of a fire, and thereby prevent the flanges from separating and allowing oil or gas to leak from the flange and fuel the fire.

A further advantage of arranging the fixing cover with the filler on the fixing of the pipeline connection is that the fixing cover provides a cost effective way of protecting the fixings in the event of a fire, in comparison to other methods of protecting the fixings involving providing a fitted box over the flange connection.

A further advantage of the above fixing cover is that protection is provided to the bolt against surface erosion or corrosion caused by the bolt's environment.

According to another aspect of the invention, according to claim 13, there is provided a concrete anchor connection, comprising at least one fixing part inserted into concrete and a fixing cover for the fixing part, the fixing cover being arranged to cover an exposed portion of the fixing part, wherein a filler is provided between the fixing cover and the fixing part, and wherein the fixing cover further comprises gripping means.

The concrete anchor connection may further include an attachment portion for attachment of an item for connection thereto. The item for connection may be part of a safety or control system, for example for hanging the same in a tunnel.

The fixing cover may include any of the features described above in relation to the first aspect of the invention, as long as it falls within the wording of claim 3.

An advantage of arranging the fixing cover to cover the exposed portion of the fixing is that the fixing cover can protect the fixing from fire, which could reduce the strength of the fixing. The filler may inhibit heat from transferring to the fixing.

An advantage of the sealant being provided on the end surface of the fixing cover is that the surface of the concrete may be uneven, and so the sealant prevents there being space between the end surface of the fixing cover and the surface of the concrete, into which air or moisture could ingress.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1 shows a partially cut away side view of a structure comprising a fixing cover fitted to a bolt head that is inserted into a beam;
Figure 2 shows a section view of pipeline including a plurality of fixing covers;
Figure 3 shows a section view of a concrete anchor connection include a fixing cover;
Figure 4 shows a section view of a further embodiment of a fixing cover; and
Figure 5 shows a bottom view of the further embodiment of a fixing cover.

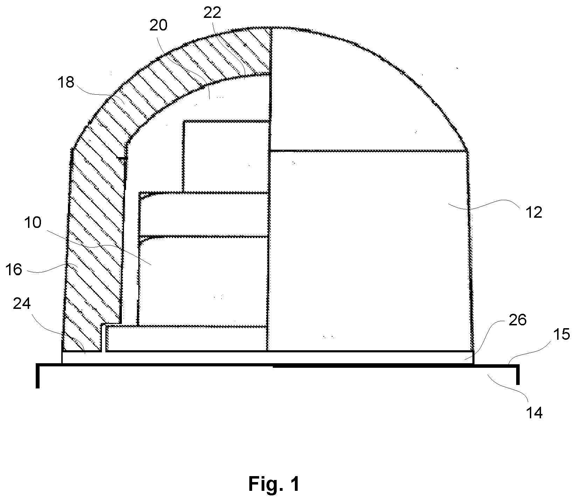

As shown in figure 1, a structure comprises a joint fixing having a bolt with a bolt head 10 and a cover 12 for the bolt head 10. The bolt is attached to a beam 14 to form the joint fixing for a framework of a building or other steel structure. The bolt head 10 is exposed above the surface 15 of the beam 14 into which the bolt is inserted.

The cover 12 is a hollow cap and is arranged to be placed over the bolt head 10. The cover 12 comprises a substantially cylindrical portion 16 and a domed upper portion 18. The cylindrical portion 16 and domed portion 18 are formed of a heat resistant plastics material. The cover 12 also comprises an inner gripping portion (not shown) that grips the bolt head 10 to retain the cover 12 in position. The thickness of the heat resistant plastics material forming the domed portion 16 is approximately 4 mm to 6 mm. The thickness of the heat resistant plastics material forming the wall of the cylindrical portion 16 is 11 to 13 mm and the height of the cylindrical portion is approximately 28 to 30 mm. The overall external diameter of the cylindrical portion 16 is approximately 57 mm.

A filler 20 is provided between the inner surface 22 of the cover 12 and the bolt head 10. The filler prevents air or other fluids from entering between the inner surface 22 of the cover 12 and the bolt head 10. The filler 20 comprises a corrosion inhibitor and an insulating material. According to a not claimed embodiment, the filler 20 may be grease, which may be Molykote (RTM) 1000 Paste or may be Molykote (RTM) Cu-7439 Plus Paste, the latter may be beneficial for use in for highly corrosive environments

The base 24 of the cover 12 is substantially circular. The material of the filler forms a seal 26 between the base 24 of the cover and the upper surface 15 of the beam 14. The seal also acts to prevent air or other fluids from entering between the inner surface 22 of the cover 12 and the bolt head 10.

According to a not claimed method of protecting the bolt head 10 of a bolt attached to a beam 14, the filler 20, in a fluid state, is inserted onto the inside surface 22 and the base surface 24 of the cover 12, and the cover 12 is then placed over the bolt head. Sufficient filler is inserted onto the inside surface 22 of the cover such that the filler material fills the whole space between the inner surface 22 of the fixing cover 12 and the bolt head 10. The filler is then hardened by curing. The filler material formed on the base surface 24 of the cover 12 forms a seal 26 between the upper surface 15 of the beam 14 and the cover.

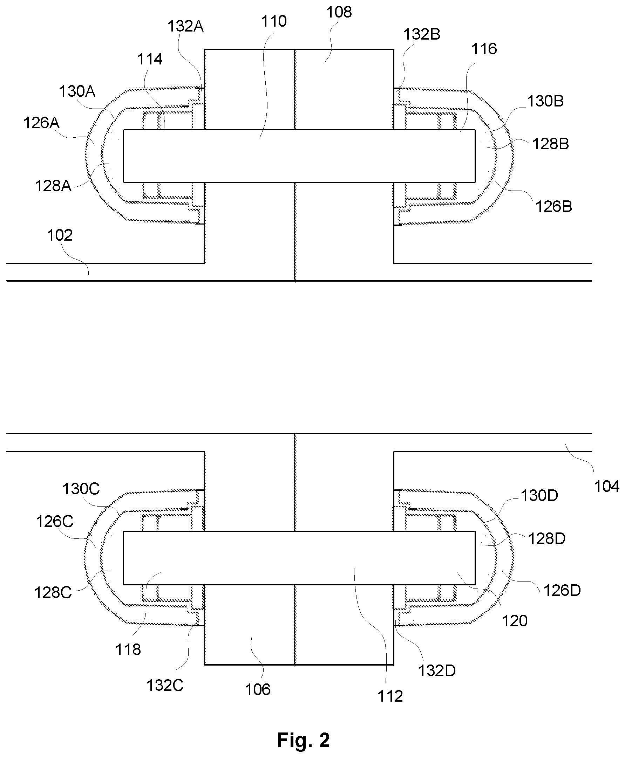

As shown in figure 2, a pipeline comprising two pipes 102, 104, each pipe 102, 104 having a flange 106, 108 for connecting the pipes 102, 104 together. The flanges 106, 108 are provided in a face-to-face arrangement and are fixed together with bolts 110, 112.

The bolts 110, 112 extend through bores in the flanges 106, 108, with the first and second ends 114, 116, 118, 120 of the bolts 110, 112 protruding from the outer surface 122, 124 of the flanges 106, 108. Fixing covers 126A, 126B, 126C, 126D are arranged over the ends 114, 116, 118, 120 of the bolts 110, 112, with a filler 128A, 128B, 128C, 128D provided between the inside surface 130A, 130B, 130C, 130D of the fixing cover 126 and the ends 114, 116, 118, 120 of the bolts 110, 112.

The fixing cover 126 is substantially the same as the fixing cover 14 discussed above in figure 1. The filler 128 fills the space between the fixing cover 126 and its respective bolt, preventing air from entering between the inner surface 130 of the cover 126 and the end of the respective bolt. The filler 128 also inhibits heat from transferring to the bolt in the event of a fire. This prevents the fixing cover 126 from expanding and thereby prevents the flanges 106, 108 from separating and allowing the contents of the pipes 102, 104 to leak from between the flanges 106, 108.

According to the invention, the filler 128 is a solid tablet that is placed between the fixing cover 126 and the bolt. The solid tablet (not shown) comprises a corrosion inhibitor that releases vapour. This vapour fills the space between the fixing cover 126 and the bolt and inhibits corrosion.

A seal 132A, 132B, 132C, 132D is provided between the base 134 of the cover 126 and the outer surface 122, 124 of the flanges. The seal 132 is formed of the same material as the filler 128.

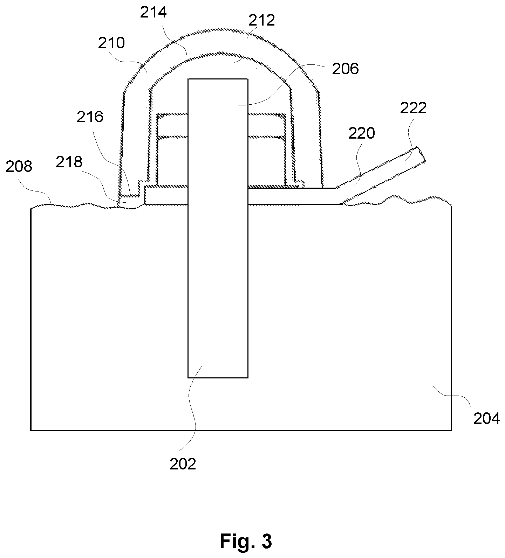

As shown in figure 3, a concrete anchor connection comprises an anchor bolt 202 inserted into concrete 204. An end 206 of the bolt protrudes above the surface 208 of the concrete 204. A fixing cover 210 is arranged over the end 206 of the bolt 202. The fixing cover 210 is substantially the same as the fixing cover 14 discussed above in relation to the first embodiment of the invention. A filler 212 is provided between the inner surface 214 of the fixing cover 210 and the end 206 of the bolt 202, preventing air or other fluids entering between the inner surface 212 of the fixing cover 210 and the end of the bolt 206.

As shown in figure 3, the base 216 of the cover is flat, whereas the surface 208 of the concrete 204 is uneven. A seal 218, formed of the material of the filler 212, is formed between the base 216 of the cover, and the surface 208 of the concrete. This prevents moisture or other fluids from entering through any spaces between the base 216 of the fixing cover 210 and the surface 208 of the concrete 204.

The concrete anchor connection comprises an attachment portion 220 for attachment of an item for connection thereto. The item for connection may be part of a safety or control system, for example for hanging the same in a tunnel. The attachment portion 220 is connected to the bolt 202 and extends beyond the base 216 of the fixing cover 210, such that an end 222 of the attachment portion 220 is exposed. The base 216 comprises a cut-away portion to allow the end 22 of the attachment portion 220 to protrude from beneath the fixing cover 210.

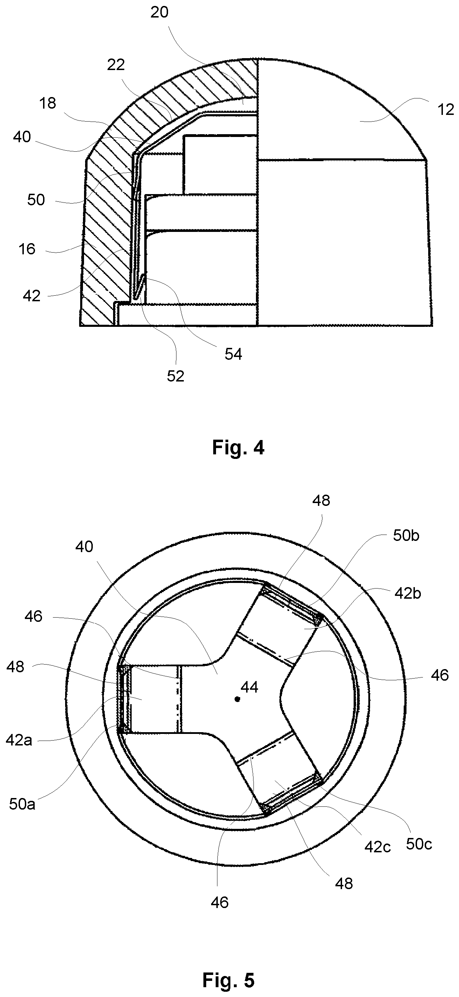

According to the invention, as show in figures 4 and 5, the fixing cover 12 comprises gripping means 40 on the inner surface 22 for attaching the fixing cover 12 to the fixing 10. The gripping means 40 may comprise three resilient arms 42. In addition to the filler 20, the resilient arms 42 may provide resistance against the fixing cover 12 being blown off the fixing, for example in an explosion. The three arms 42a, 42b, 42c extend away from a central point 44 such that they have equal angles therebetween. The arms 42a, 42b, 42c are arranged at the equal angles so that the inner gripping portion can be placed over a bolt head 10. The bolt head 10 may be a hexagonal bolt head 10, The equal angles between the three arms 42a, 42b, 42c are arranged such that the three (non-adjacent) spaced faces of the hexagonal bolt head 10 may be gripped.

In more detail, the inner gripping means 40 may be made of a metal which can flex and has some spring characteristics to allow for elastic deformation of the arms 42a, 42b, 42c as will be described below.

Each arm 42a, 42b, 42c may have a generally flat cross-section and may extend horizontally away from the centre point 44 to a first shoulder 46 and then to a second shoulder 48. The shoulders 46 and 48 may allow the gripping portion to generally follow an inner surface of the fixing cover 12, as will be described below.

At the second shoulder 48 each arm 42a, 42b, 42c may extend vertically down an inner surface 22 of the fixing cover 12.

The flanges 50a, 50b, 50c may be located on the vertical section of each of the arms 42a, 42b, 42c. The flange 50a may extend outwardly towards the inner face 22 of the fixing cover 12 and may be arranged to engage said inner face 22 of the fixing cover 12 to thereby hold the inner gripping means 40 in position within the fixing cover 12. Because the flange 50 points downwards it prevents the gripping means 40 being pulled out of the fixing cover 12, but allows the gripping means 40 to be pushed into the fixing cover 12.

The spring quality of the metal from which the gripping means 40 may be made allows the arms 42a, 42b, 42c and the flanges 50a, 50b, 50c to maintain pressure against the inner face 22 of the fixing cover 12 to thereby maintain the gripping action.

At the base of each arm 42a, 42b, 42c there may be flanges 52, one at each side of each arm 42a, 42b, 42c. These flanges 52 may extend inwards and may have a point 54 which is directed upwards. The purpose of the flanges 52 is to grip the bolt head 10 when the fixing cover 12 is pushed onto the bolt head 10.

A filler 20 is also provided between the inner surface 22 of the cover 12 and the bolt head 10. The filler prevents air or other fluids from entering between the inner surface 22 of the cover 12 and the bolt head 10. The material of the filler 20 may form a seal as described above.

In this example, should an attempt be made to pull the fixing cover 12 from the bolt head 10 the points 54 of the flanges 52 will push into the fixing 10 and deter outward movement of the fixing cover 12 away from the bolt head 10. Thus, tension will be created between the flanges 52 and the flanges 50 to retain the fixing cover 12 on the bolt head 10.

In addition, the flexible nature of the gripping means 40 allows the bolt head 10 or nut to expand within the fixing cover 12 by causing flexure of the gripping means 40. The expansion does not result in excessive outward pressure on the fixing cover 12 because of a gap between the arms 42 of the gripping means 40 and the inner surface 22 of the fixing cover 12.

By providing a mechanical fixing in the form of the gripping means 40, there is provided a more robust fixing. Furthermore, the presence of a mechanical fixing means that the filler does not need to cure, in order to secure the fixing cover 12. Fillers which cure may often expand and crack, causing the fixing cover to break, or lose function. Therefore, in the presence of the mechanical fixing, the filler may provide its function, without the need for hardening or curing, thereby increasing the lifetime and reliability of the fixing cover 12.

The filler may be. according to a not claimed embodiment, a gel-type substance, which does not harden over time. This avoids the disadvantage of a hardening filler that may exhibit peel stress at its edges. The filler may be, according to another not claimed embodiment, grease, which may be Molykote (RTM) 1000 Paste or may be Molykote (RTM) Cu-7439 Plus Paste, the latter may be beneficial for use in for highly corrosive environments

By providing a fixing cover 12 with a mechanical fixing and a filler, the strength of the fixing cover 12 is maximised, while water ingress and corrosion are prevented, as well as broadening the types of filler that can successfully be used in the fixing cover 12. The filler 20 is a volatile corrosion inhibitor tablet, which may be in a compressed powder form, shaped to fit inside the fixing cover 12 with the gripping means 40 and receive the fixing 10 to be covered.

All of the features disclosed in this specification (including any accompanying claims, abstract and drawings), and/or all of the steps of any method or process so disclosed, may be combined in any combination, except combinations where at least some of such features and/or steps are mutually exclusive, according to the wording of the appended claims.

## Claims

1. A method of protecting a fixing that is inserted in a structure, comprising inserting a filler (20, 128, 212) into a fixing cover (12) to cover an inner surface of a fixing cover (12), and attaching the cover to an exposed portion of the fixing (10), wherein the fixing cover (12) comprises gripping means (40), wherein the filler (20, 128, 212) comprises a corrosion inhibitor and wherein the filler (20, 128, 212) is a solid tablet that releases vapour to inhibit corrosion, wherein when the filler (20, 128, 212) is inserted into the fixing cover (12) and the fixing cover (12) is attached to the fixing, the filler (20, 128, 212) is retained inside the fixing cover (12), and the gripping means (40) secures the fixing cover (12) to the fixing.

2. The method according to claim 1 wherein the filler (20, 128, 212) comprises a filler (20, 128, 212) material that fills a space between the inner surface of the fixing cover (12) and the fixing.

3. A fixing cover (12) for use in the method of claim 1, configured to cover an exposed portion of a fixing (10), the fixing cover (12) comprising a filler (20, 128, 212) and a gripping means (40), wherein the filler (20, 128, 212) comprises a corrosion inhibitor and **characterized in that** the filler (20, 128, 212) is a solid tablet that releases vapour to inhibit corrosion.

4. The fixing cover (12) of according to claim 3, wherein the filler (20, 128, 212) is adapted to fill a space between the fixing cover (12) and the fixing.

5. The fixing cover (12) according to claims 3 or 4, wherein the filler (20, 128, 212) comprises an insulating material.

6. The fixing cover (12) according to any of claims 3-5, wherein the fixing cover (12) comprises a hollow cap having a domed outer surface and an end surface, wherein a sealant is provided on the end surface and is adapted to form a seal (26) between the end surface and a surface of a structure into which the fixing is inserted.

7. The fixing cover (12) according to any of claims 3-6, wherein the gripping means (40) comprises one or more resilient arms (42).

8. The fixing cover (12) according to claim 7, wherein the one or more resilient arms (42) extend away from a central point of the fixing cover (12).

9. The fixing cover (12) according to claim 8, wherein there are three or more resilient arms (42), having equal angles therebetween.

10. The fixing cover (12) according to any of claims 3-9, wherein the gripping means (40) are made of a material which can flex and has some spring characteristics to allow for plastic deformation.

11. A framework for a building comprising a beam (14), a fixing inserted into the beam (14) and the fixing cover (12) of claim 3 for the fixing, the fixing cover (12) being arranged to cover an exposed portion of the fixing (10), wherein a filler (20, 128, 212) is provided between the fixing cover (12) and the fixing, the filler (20, 128, 212) filling a space between the fixing cover (12) and the fixing

12. A pipeline comprising at least two pipes (102, 104), each of the pipes (102, 104) having a flange (106, 108) for connection to an adjacent pipe (102, 104), at least one fixing inserted through adjacent flanges (106, 108) and the fixing cover (12) of claim 3 for the fixing, the fixing cover (12) being arranged to cover an exposed portion of the fixing (10), wherein a filler (20, 128, 212) is provided between the fixing cover (12) and the fixing, the filler (20, 128, 212) filling a space between the fixing cover (12) and the fixing.

13. A concrete anchor connection comprising at least one fixing inserted into concrete and the fixing cover (12) of claim 3 for the fixing, the fixing cover (12) being arranged to cover an exposed portion of the fixing part (10), wherein a filler (20, 128, 212) is provided between the fixing cover (12) and the fixing, the filler (20, 128, 212) filling a space between the fixing cover (12) and the fixing).

## Patentansprüche

1. Verfahren zum Schutz einer Befestigung, die in eine Struktur eingesetzt ist, umfassend Einsetzen eines Füllstoffs (20, 128, 212) in eine Befestigungsabdeckung (12), um eine Innenfläche einer Befestigungsabdeckung (12) abzudecken, und Anbringen der Abdeckung an einem freiliegenden Abschnitt der Befestigung (10), wobei die Befestigungsabdeckung (12) eine Greifeinrichtung (40) umfasst, wobei der Füllstoff (20, 128, 212) einen Korrosionshemmer umfasst und wobei der Füllstoff (20, 128, 212) eine feste Tablette ist, die zur Korrosionshemmung Dampf freisetzt, wobei beim Einsetzen des Füllstoffs (20, 128, 212) in die Befestigungsabdeckung (12) und Anbringen der Befestigungsabdeckung (12) an der Befestigung der Füllstoff (20, 128, 212) innerhalb der Befestigungsabdeckung (12) gehalten wird und die Greifeinrichtung (40) die Befestigungsabdeckung (12) an der Befestigung fixiert.

2. Verfahren nach Anspruch 1, wobei der Füllstoff (20, 128, 212) einen Füllstoff (20, 128, 212) umfasst, der einen Raum zwischen der Innenfläche der Befestigungsabdeckung (12) und der Befestigung füllt.

3. Befestigungsabdeckung (12) zur Verwendung in dem Verfahren nach Anspruch 1, die dazu ausgelegt ist, einen freiliegenden Abschnitt einer Befestigung (10) abzudecken, wobei die Befestigungsabdeckung (12) einen Füllstoff (20, 128, 212) und eine Greifeinrichtung (40) umfasst, wobei der Füllstoff (20, 128, 212) einen Korrosionshemmer umfasst und **dadurch gekennzeichnet ist, dass** der Füllstoff (20, 128, 212) eine feste Tablette ist, die Dampf freisetzt, um Korrosion zu verhindern.

4. Befestigungsabdeckung (12) nach Anspruch 3, wobei der Füllstoff (20, 128, 212) dazu eingerichtet ist, einen Raum zwischen der Befestigungsabdeckung (12) und der Befestigung zu füllen.

5. Befestigungsabdeckung (12) nach Anspruch 3 oder 4, wobei der Füllstoff (20, 128, 212) ein isolierendes Material umfasst.

6. Befestigungsabdeckung (12) nach einem der Ansprüche 3-5, wobei die Befestigungsabdeckung (12) eine hohle Kappe mit einer gewölbten Außenfläche und einer Endfläche umfasst, wobei ein Dichtungsmittel an der Endfläche vorgesehen ist und dazu eingerichtet ist, eine Dichtung (26) zwischen der Endfläche und einer Fläche einer Struktur zu bilden, in die die Befestigung eingesetzt ist.

7. Befestigungsabdeckung (12) nach einem der Ansprüche 3-6, wobei die Greifeinrichtung (40) einen oder mehrere elastische Arme (42) umfasst.

8. Befestigungsabdeckung (12) nach Anspruch 7, wobei sich der eine oder die mehreren elastischen Arme (42) von einem zentralen Punkt der Befestigungsabdeckung (12) weg erstrecken.

9. Befestigungsabdeckung (12) nach Anspruch 8, wobei drei oder mehr elastische Arme (42) mit gleichen Winkeln dazwischen vorhanden sind.

10. Befestigungsabdeckung (12) nach einem der Ansprüche 3-9, wobei die Greifeinrichtung (40) aus einem Material hergestellt ist, das biegsam ist und einige Federeigenschaften aufweist, um eine plastische Verformung zu ermöglichen.

11. Rahmengestell für ein Gebäude, umfassend einen Träger (14), eine in den Träger (14) eingesetzte Befestigung und die Befestigungsabdeckung (12) nach Anspruch 3 für die Befestigung, wobei die Befestigungsabdeckung (12) so angeordnet ist, dass sie einen freiliegenden Abschnitt der Befestigung (10) abdeckt, wobei zwischen der Befestigungsabdeckung (12) und der Befestigung ein Füllstoff (20, 128, 212) vorgesehen ist, wobei der Füllstoff (20, 128, 212) einen Raum zwischen der Befestigungsabdeckung (12) und der Befestigung füllt.

12. Rohrleitung, die mindestens zwei Rohre (102, 104) umfasst, wobei jedes der Rohre (102, 104) einen Flansch (106, 108) zur Verbindung mit einem benachbarten Rohr (102, 104), mindestens eine durch benachbarte Flansche (106, 108) und die Befestigungsabdeckung (12) nach Anspruch 3 für die Befestigung eingesetzte Befestigung aufweist, wobei die Befestigungsabdeckung (12) angeordnet ist, um einen freiliegenden Abschnitt der Befestigung (10) abzudecken, wobei ein Füllstoff (20, 128, 212) zwischen der Befestigungsabdeckung (12) und der Befestigung vorgesehen ist, wobei der Füllstoff (20, 128, 212) einen Raum zwischen der Befestigungsabdeckung (12) und der Befestigung füllt.

13. Betonankerverbindung, umfassend mindestens eine in Beton eingesetzte Befestigung und die Befestigungsabdeckung (12) nach Anspruch 3 für die Befestigung, wobei die Befestigungsabdeckung (12) so angeordnet ist, dass sie einen freiliegenden Abschnitt des Befestigungsteils (10) abdeckt, wobei zwischen der Befestigungsabdeckung (12) und der Befestigung ein Füllstoff (20, 128, 212) vorgesehen ist, wobei der Füllstoff (20, 128, 212) einen Raum zwischen der Befestigungsabdeckung (12) und der Befestigung füllt.

## Revendications

1. Procédé de protection d'une fixation qui est insérée dans une structure, comprenant l'insertion d'une matière de remplissage (20, 128, 212) dans un couvercle de fixation (12) pour couvrir une surface intérieure d'un couvercle de fixation (12), et l'attache du couvercle à une partie exposée de la fixation (10), dans lequel le couvercle de fixation (12) comprend des moyens d'entrée en prise (40), dans lequel la matière de remplissage (20, 128, 212) comprend un inhibiteur de corrosion et dans lequel la matière de remplissage (20, 128, 212) est une pastille solide qui libère de la vapeur afin d'inhiber la corrosion, dans lequel, lorsque la matière de remplissage (20, 128, 212) est insérée dans le couvercle de fixation (12) et le couvercle de fixation (12) est attaché à la fixation, la matière de remplissage (20, 128, 212) est retenue à l'intérieur du couvercle de fixation (12), et les moyens d'entrée en prise (40) assujettissent le couvercle de fixation (12) à la fixation.

2. Procédé selon la revendication 1 dans lequel la matière de remplissage (20, 128, 212) comprend un matériau de remplissage (20, 128, 212) qui remplit un espace entre la surface intérieure du couvercle de fixation (12) et la fixation.

3. Couvercle de fixation (12) pour utilisation dans le procédé de la revendication 1, configuré pour couvrir une partie exposée d'une fixation (10), le couvercle de fixation (12) comprenant une matière de remplissage (20, 128, 212) et des moyens d'entrée en prise (40), dans lequel la matière de remplissage (20, 128, 212) comprend un inhibiteur de corrosion et **caractérisé en ce que** la matière de remplissage (20, 128, 212) est une pastille solide qui libère de la vapeur afin d'inhiber corrosion.

4. Couvercle de fixation (12) de selon la revendication 3, dans lequel la matière de remplissage (20, 128, 212) est adaptée pour remplir un espace entre le couvercle de fixation (12) et la fixation.

5. Couvercle de fixation (12) selon les revendications 3 ou 4, dans lequel la matière de remplissage (20, 128, 212) comprend un matériau isolant.

6. Couvercle de fixation (12) selon de quelconques des revendications 3 à 5, dans lequel le couvercle de fixation (12) comprend une coiffe creuse ayant une surface extérieure en dôme et une surface d'extrémité, dans lequel un produit d'étanchéité est prévu sur la surface d'extrémité et est adapté pour former une étanchéité (26) entre la surface d'extrémité et une surface d'une structure dans laquelle la fixation est insérée.

7. Couvercle de fixation (12) selon de quelconques des revendications 3 à 6, dans lequel les moyens d'entrée en prise (40) comprennent un ou plusieurs bras résilients (42).

8. Couvercle de fixation (12) selon la revendication 7, dans lequel l'un ou les plusieurs bras résilients (42) s'éloignent d'un point central du couvercle de fixation (12).

9. Couvercle de fixation (12) selon la revendication 8, dans lequel il y a trois ou plus de trois bras résilients (42), ayant des angles égaux entre ceux-ci.

10. Couvercle de fixation (12) selon de quelconques des revendications 3 à 9, dans lequel les moyens d'entrée en prise (40) sont faits d'un matériau qui peut fléchir et a certaines caractéristiques élastiques pour permettre la déformation plastique.

11. Charpente pour un bâtiment comprenant une poutre (14), une fixation insérée dans la poutre (14), et le couvercle de fixation (12) de la revendication 3 pour la fixation, le couvercle de fixation (12) étant agencé pour couvrir une partie exposée de la fixation (10), dans laquelle une matière de remplissage (20, 128, 212) est prévue entre le couvercle de fixation (12) et la fixation, la matière de remplissage (20, 128, 212) remplissant un espace entre le couvercle de fixation (12) et la fixation.

12. Conduite de transport, comprenant au moins deux conduites (102, 104), chacune des conduites (102, 104) ayant une bride (106, 108) pour le raccordement à une conduite adjacente (102, 104), au moins une fixation insérée à travers des brides adjacentes (106, 108), et le couvercle de fixation (12) de la revendication 3 pour la fixation, le couvercle de fixation (12) étant agencé pour couvrir une partie exposée de la fixation (10), dans laquelle une matière de remplissage (20, 128, 212) est prévue entre le couvercle de fixation (12) et la fixation, la matière de remplissage (20, 128, 212) remplissant un espace entre le couvercle de fixation (12) et la fixation.

13. Pièce de raccordement d'ancrage de béton, comprenant au moins une fixation insérée dans du béton, et le couvercle de fixation (12) de la revendication 3 pour la fixation, le couvercle de fixation (12) étant agencé pour couvrir une partie exposée de la partie de fixation (10), dans laquelle une matière de remplissage (20, 128, 212) est prévue entre le couvercle de fixation (12) et la fixation, la matière de remplissage (20, 128, 212) remplissant un espace entre le couvercle de fixation (12) et la fixation.
